# EUROPEAN PATENT APPLICATION

(11) **EP 4 765 389 A1**
(43) Date of publication of application: **24.06.2026**
(21) Application number: 24914798.4
(22) Date of filing: 01.08.2024
(51) Int. Cl.: H01M 50/209

(54) **BATTERY AND ELECTRICAL APPARATUS**

(30) Priority: 03.01.2024 CN 202410009891
(71) Applicant: Contemporary Amperex Technology Co., Limited, Ningde, Fujian 352100 (CN)
(72) Inventor: YUAN, Shenggang, Ningde, Fujian 352100 (CN); WANG, Zengzhong, Ningde, Fujian 352100 (CN); NIU, Jianxin, Ningde, Fujian 352100 (CN)
(74) Representative: Lorenz Seidler Gossel Part. mbB
(86) International application number: PCT/CN2024/109155
(87) International publication number: WO 2025/145576

(57) **Abstract**

Provided are a battery (100) and an electrical apparatus, which are applicable to the technical field of battery (100). The electrical apparatus includes the battery (100), the battery (100) including a battery unit (10) and a box body (20), where the battery unit (10) includes at least one battery cell (1). The box body (20) is provided with two first walls (21) opposite to each other along a first direction (Y), the two first walls (21) being each connected with a first connection member (22) configured to be connected to an external device, where in the first direction (Y), the battery unit (10) is disposed between the two first walls (21) and is position-limited by the first walls (21). In a case where the first connection member (22) is connected to the external device, the external device can constrain relative positions of the two first walls (21) in the first direction (Y), such that the two first walls (21) can constrain the battery unit along the first direction (Y) to effectively resist the expansion of the battery cell (1) and to reduce or eliminate the provision of structures such as an expansion beam, which helps to reduce the cost of the battery (100).

## Description

### CROSS-REFERENCE

The present application claims priority to Chinese Patent Application No. 202410009891.0, filed with the China National Intellectual Property Administration on January 3, 2024, entitled "BATTERY AND ELECTRICAL APPARATUS", the entire content of which is incorporated herein by reference.

### TECHNICAL FIELD

The present application relates to the field of battery technologies, and in particular to a battery and an electrical apparatus.

### BACKGROUND

In the related art, a battery includes a box body assembly and battery cells disposed within the box body assembly.

In some cases, structures such as an expansion beam, a connection structure, and a tension rod are provided within the box body assembly, which are configured to restrict the expansion force of the battery cells. Such a structure results in the use of a relatively large number of components inside the battery, leading to high cost of the battery.

### SUMMARY OF THE INVENTION

In view of the aforementioned problem, an objective of the embodiments of the present application is to provide a battery and an electrical apparatus, which can alleviate the problem of high battery cost.

The technical solutions that embodiments of the present application adopt are as follows.

In a first aspect, an embodiment of the present application provides a battery, including:
a battery unit including at least one battery cell; and
a box body provided with two first walls opposite to each other along a first direction, the two first walls being each connected with a first connection member configured to be connected to an external device, where in the first direction, the battery unit is disposed between the two first walls and is position-limited by the first walls.

In the battery according to the embodiment of the present application, by providing the first walls of the box body that are opposite to each other along the first direction with the first connection members configured to be connected to the external device, and by positioning the battery unit between the two first walls along the first direction and position-limiting it by the first walls, in a case where the first connection members are connected to the external device, the external device can constrain the relative positions of the first connection members on the two first walls in the first direction, thereby constraining the relative positions of the two first walls in the first direction. This enables the two first walls to constrain the battery unit along the first direction, so as to effectively resist the expansion of the battery cell of the battery unit along the first direction. With such a configuration, on the basis of being capable of effectively resisting the expansion force of the battery cell, the provision of structures such as an expansion beam is reduced or eliminated, which helps to reduce the cost of the battery.

In some embodiments, a plurality of the battery cells are provided, wherein a wall surface having a largest area among all wall surfaces of at least a portion of the battery cells is perpendicular to the first direction.

With such a configuration, under the constraining effect of the external device on the first connection members on the two first walls, the two first walls can constrain the battery unit along the first direction, so as to effectively resist the expansion of the battery cell of the battery unit along the first direction, meaning that the expansion force of the largest wall surface of at least a portion of the battery cells can be effectively resisted, thereby enabling improvement in the product competitiveness of the battery.

In some embodiments, a projection of the first connection member onto the first wall along the first direction at least partially overlaps a projection of at least a portion of the battery cells onto the first wall along the first direction.

With such a configuration, a force applied by the external device to the first connection member can effectively resist the expansion force of the wall surface of at least a portion of the battery cells along the first direction, thereby enabling effective improvement in the product competitiveness of the battery.

In some embodiments, the battery unit includes at least one group of a plurality of battery cells arranged along the first direction, all of the battery cells in each group sequentially abutting along the first direction, and a wall surface having a largest area among all wall surfaces of the battery cells being perpendicular to the first direction.

With such a configuration, under the constraining effect of the external device on the first connection members on the two first walls, the two first walls can constrain the battery unit along the first direction, so as to effectively resist the expansion of the battery cell of the battery unit along the first direction, meaning that the expansion of the largest wall surface of all the battery cells of each group can be effectively resisted, thereby enabling improvement in the product competitiveness of the battery.

In some embodiments, a projection of the battery cells of each group onto the first wall along the first direction at least partially overlaps a projection of at least one said first connection member onto the first wall along the first direction.

With such a configuration, a force applied by the external device to the first connection member can effectively resist the expansion force of the wall surfaces of the battery cells of each group along the first direction, thereby enabling effective improvement in the product competitiveness of the battery.

In some embodiments, the battery further includes a cover connected to an end of the box body that is located along a second direction, the second direction intersecting with the first direction, where the battery unit is disposed within a space enclosed by the box body and the cover.

By connecting the cover to the box body, the box body can, through the connection relationship between the cover and the box body, constrain relative positions of the two first walls in the first direction, such that the two first walls can constrain the battery unit along the first direction to effectively resist the expansion of the battery cell along the first direction, which is beneficial for improving the product competitiveness of the battery.

In some embodiments, two opposite sides of the cover along the first direction are each provided with a second connection member, the second connection member being configured to be connected to the first connection member and the external device.

With such a configuration, the second connection member can be connected to the first connection member, and then connected together to the external device, which can improve connection strength between the box body, the cover, and the external device, thereby enabling improvement in the constraining force on the first walls, which further enables improvement in resistance to the expansion force of the battery cell, thereby enabling effective mitigation of the problem of the expansion of the battery cell, so as to benefit the improvement of the product competitiveness of the battery.

In some embodiments, the battery unit extends beyond the box body along the second direction toward the cover.

As such, the constraining force exerted by the box body assembly, which is constituted by the box body and the cover, on the battery unit can be improved, thereby enabling effective improvement in resistance to the expansion force of the battery cell.

In some embodiments, an edge of an end of the box body facing the cover along the second direction is provided with a third connection member, and an edge of an end of the cover facing the box body along the second direction is provided with a fourth connection member, the third connection member being connected to the fourth connection member.

With such a configuration, the constraining force exerted by the box body assembly, which is constituted by the box body and the cover, on the battery unit can be improved, thereby enabling effective improvement in resistance to the expansion force of the battery cell.

In some embodiments, the first connection member is disposed on the third connection member; and/or the second connection member is disposed on the fourth connection member.

With such a configuration, formation of the first connection member on the box body is made very simple; and/or formation of the second connection member on the cover is made very simple.

In some embodiments, a first fixing structure is disposed between the cover and the battery unit, the first fixing structure fixing the battery unit to the cover;
and/or a second fixing structure is disposed between the box body and the battery unit, the second fixing structure fixing the battery unit to the box body.

With such a configuration, the battery unit is fixed to the cover via the first fixing structure, enabling the cover to provide a certain constraining effect on the battery unit, which helps to resist the expansion force of the battery cell; and/or the battery unit is fixed to the box body via the second fixing structure, enabling the box body to provide a certain constraining effect on the battery unit, which helps to resist the expansion force of the battery cell.

In some embodiments, the first fixing structure and/or the second fixing structure includes an adhesive layer.

With such a configuration, the battery unit is adhered to the cover and/or the box body via the adhesive layer, which can reduce the cost of fixing the battery unit to the cover and/or the box body. Furthermore, the process of fixing the battery unit to the cover and/or the box body is made very simple and easy to implement.

In some embodiments, one side of the box body along a third direction is provided with a second wall, the second wall being configured to position-limit the battery unit along the third direction, and the second wall being connected with a fifth connection member configured to be connected to the external device, where the third direction intersects with both the first direction and the second direction.

As such, the expansion of the battery cell can be resisted in multiple directions, which is beneficial for improving the product competitiveness of the battery and results in a low cost.

In some embodiments, a constraint member opposite to the second wall along the third direction is disposed inside the box body, where along the third direction, the battery unit is located between the second wall and the constraint member and is position-limited by the second wall and the constraint member;
or the box body is provided with a third wall opposite to the second wall along the third direction, the third wall being connected with a sixth connection member configured to be connected to the external device, where along the third direction, the battery unit is located between the second wall and the third wall and is position-limited by the second wall and the third wall.

With such a configuration, the external device and the constraint member can jointly resist the expansion of the battery cell in the third direction; or the external device can constrain relative positions of the fifth connection member and the sixth connection member in the third direction, so as to constrain relative positions of the second wall and the third wall in the third direction, thereby enabling effective resistance to the expansion of the battery cell in the third direction. Based on this, resistance to the expansion of the battery cell can be achieved in multiple directions, with a low cost and high product competitiveness.

In some embodiments, along the first direction, a filling member is disposed between at least one of the first walls and the battery cell, the filling member abutting against the first wall and the battery unit.

With such a configuration, the first wall can better transmit the constraining force to the battery unit, so as to constrain the expansion of the battery cell in the first direction.

In some embodiments, the filling member includes one or more of a foamed material member, an elastic structure, and a plastic member.

With such a configuration, the filling member can be better filled between the first wall and the battery unit, facilitating the transmission of the constraining force from the first walls to the battery unit, thereby effectively improving the effective resistance effect to the expansion of the battery cell.

In some embodiments, the battery further includes a thermal management component disposed on the box body, the thermal management component being configured to exchange heat with the battery unit.

With such a configuration, heating up or cooling down of the battery can be achieved, which is beneficial for improving the product competitiveness of the battery.

In a second aspect, an embodiment of the present application provides an electrical apparatus, including a battery according to any one of the embodiments of the first aspect.

The electrical apparatus according to the embodiment of the present application, by adopting the battery discussed above, can resist the expansion of the battery cell along the first direction by the electrical apparatus itself. On the basis of being capable of effectively resisting the expansion force of the battery cell, the provision of structures such as an expansion beam is eliminated, which helps to reduce the cost of the battery and is beneficial for improving the product competitiveness.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific implementations of the present application are described below.

### DESCRIPTION OF DRAWINGS

In order to explain the technical solutions in the embodiments of the present application more clearly, the accompanying drawings needed in the description of the embodiments or demonstrative technologies will be briefly introduced below. Obviously, the accompanying drawings in the following descriptions are only some embodiments of the present application. For a person of ordinary skill in the art, other accompanying drawings can be obtained according to these accompanying drawings without creative work.
FIG. 1 is a schematic diagram of a vehicle according to some embodiments of the present application;
FIG. 2 is a schematic structural diagram of a battery according to some embodiments of the present application;
FIG. 3 is an exploded schematic diagram of a battery according to some embodiments of the present application;
FIG. 4 is a cooperative structural diagram of a box body and a battery unit of a battery according to some embodiments of the present application;
FIG. 5 is an enlarged view of portion A in FIG. 4;
FIG. 6 is a top view of FIG. 4;
FIG. 7 is an enlarged view of portion B in FIG. 3;
FIG. 8 is a cooperative top view of a box body and a battery unit of a battery according to some other embodiments of the present application; and
FIG. 9 is a cooperative top view of a box body and a battery unit of a battery according to some further embodiments of the present application.

### Reference Numerals in the Drawings:

1000 - vehicle; 100 - battery; 200 - controller; 300 - motor; 400 - vehicle body; 10 - battery unit; 1 - battery cell; 20 - box body; 21 - first wall; 22 - first connection member; 2202 - first connection hole; 23 - third connection member; 2301 - third connection hole; 24 - second wall; 25 - fifth connection member; 26 - third wall; 27 - sixth connection member; 30 - cover; 31 - second connection member; 3101 - second connection hole; 32 - fourth connection member; 3201 - fourth connection hole; 33 - fourth wall; 40 - filling member; 50 - constraint member; Y - first direction; Z - second direction; X - third direction.

### DETAILED DESCRIPTION

The embodiments of the present application are described in detail below. Examples of the embodiments are illustrated in the accompanying drawings, where the same or similar labels from beginning to end denote the same or similar components or components having the same or similar functions. The embodiments described below with reference to the accompanying drawings are exemplary and are intended to explain the present application, but should not be construed as limiting the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and "second" may explicitly or implicitly include one or more features.

In the description of the present application, the term "a plurality" means two or more, unless otherwise explicitly and specifically defined, and "two or more" includes two. Correspondingly, the term "a plurality of groups" means two groups or more, including two groups.

In the description of the present application, unless otherwise expressly specified and limited, terms such as "mount", "connected", "connect", and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or an interaction of two elements. For those of ordinary skill in the art, the specific meanings of the aforementioned terms in the present application may be understood on a case-by-case basis.

In the description of the present application, the term "and/or" is simply a description of an association of associated objects, which indicates that there may exist three relationships, for example, A and/or B may mean: the presence of A, the presence of both A and B, and the presence of B. In addition, the character "/" in the present application generally means that the associated objects before and after it are in an "or" relationship.

While the present application has been described with reference to the preferred examples, various modifications may be made and components thereof may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

With the continuous expansion of application fields for power batteries, the requirements for the endurance of power batteries are also increasing daily. To meet the high endurance demand, a plurality of battery cells are usually connected in series, parallel, or a combination thereof to increase the capacity or power of the power battery.

During the charging and discharging process, battery cells expand, which can easily cause deformation of the box body assembly of the battery, affecting the sealing performance of the box body assembly.

In some cases, by providing expansion beams and a connection structure inside the box body assembly, the battery cell is held between two expansion beams, and the connection structure is connected to the two expansion beams to pull the two expansion beams toward each other, such that the two expansion beams can resist the expansion force of the battery cell under the action of being pulled toward each other by the connection structure. Furthermore, a tension rod may be provided at a shoulder of the battery cell to resist the expansion force of the battery cell.

However, such a structure results in the use of a relatively large number of components inside the battery, leading to high cost of the battery.

Based on the above considerations, embodiments of the present application provide a battery and an electrical apparatus. By providing the first walls of the box body that are opposite to each other along the first direction with the first connection members configured to be connected to the external device, and by positioning the battery unit between the two first walls along the first direction and position-limiting it by the first walls, in a case where the first connection members are connected to the external device, the external device can constrain the relative positions of the first connection members on the two first walls in the first direction, thereby constraining the relative positions of the two first walls in the first direction. This enables the two first walls to constrain the battery unit along the first direction, so as to effectively resist the expansion of the battery cell along the first direction. With such a configuration, on the basis of being capable of effectively resisting the expansion force of the battery cell, the provision of structures such as an expansion beam is eliminated, which helps to reduce the cost of the battery.

In some embodiments, the battery discussed in the embodiments of the present application can be used in an electrical apparatus that uses a battery as a power source.

The electrical apparatus may be, but is not limited to, a mobile phone, a tablet, a laptop, an electric toy, an electric tool, a battery vehicle, a vehicle, a ship, a spacecraft, and so on. Among them, the electric toy may include a stationary or mobile electric toy, for example, a game console, an electric toy car, an electric toy ship, an electric toy aircraft, or the like, and the spacecraft may include an aircraft, a rocket, a space shuttle, a spaceship, or the like. Classified by power source, the vehicle may be a fuel vehicle, a gas vehicle, or a new energy vehicle, where the new energy vehicle may be a pure electric vehicle, a hybrid electric vehicle, or a range-extended electric vehicle, or the like. Classified by driving mode, the vehicle may be a front-wheel-drive vehicle, a rear-wheel-drive vehicle, or a four-wheel-drive vehicle.

The battery discussed in the embodiments of the present application may be a single physical module including one or more battery cells to provide higher voltage and capacity.

For ease of description, the embodiments of the present application are described by taking the electrical apparatus as a vehicle as an example.

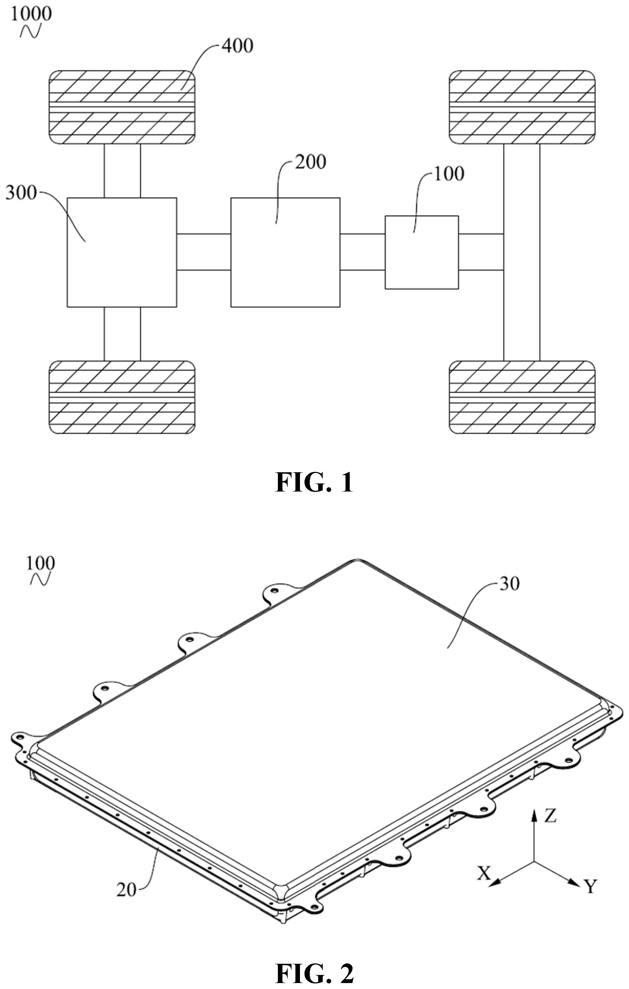

Please refer to FIG. 1. FIG. 1 is a schematic diagram of a vehicle 1000 according to some embodiments of the present application. The vehicle 1000 includes a vehicle body 400 and a battery 100.

The vehicle body 400 is a main supporting component of the vehicle 1000, and the vehicle body 400 has an engine compartment and a driver/passenger compartment. The engine compartment is configured to accommodate the battery 100, a motor 300, a controller 200, etc., of the vehicle 1000, and the driver/passenger compartment is configured to provide an operational space and a seating space for a driver and passengers. When the vehicle 1000 is a front-wheel-drive vehicle, the engine compartment is disposed at a front part of the vehicle body 400, meaning that the engine compartment is a front engine compartment. When the vehicle 1000 is a rear-wheel-drive vehicle, the engine compartment is disposed at a rear part of the vehicle body 400, meaning that, the engine compartment is a rear engine compartment. When the vehicle 1000 is a four-wheel-drive vehicle, the engine compartment is divided into a front engine compartment and a rear engine compartment, where the front engine compartment is disposed at the front part of the vehicle body 400, and the rear engine compartment is disposed at the rear part of the vehicle body 400. The driver/passenger compartment is disposed between the front part and the rear part of the vehicle body 400.

The battery 100 may be configured to supply power to the vehicle 1000. For example, the battery 100 may be used as an operating power source of the vehicle 1000. The vehicle 1000 may further include a controller 200 and a motor 300. The controller 200 is configured to control the battery 100 to supply power to the motor 300, for example, to satisfy the operating power demand when the vehicle 1000 is starting, navigating, and traveling.

In some embodiments, the battery 100 may not only be used as the operating power source for the vehicle 1000, but also as a driving power source for the vehicle 1000, to replace or partially replace fuel or natural gas to provide driving power for the vehicle 1000.

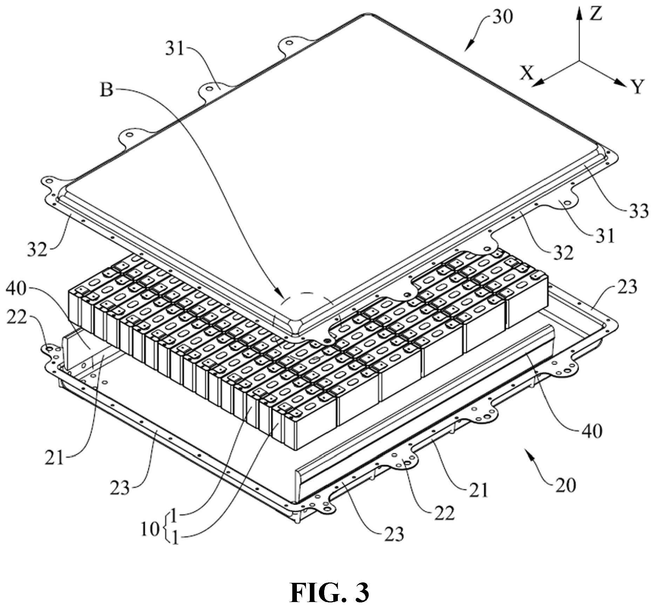

Please continue to refer to FIG. 2 and FIG. 3. FIG. 2 is a schematic structural diagram of a battery 100 according to some embodiments of the present application. FIG. 3 is an exploded view of the battery 100 according to some embodiments of the present application. The battery 100 includes a box body assembly and a battery unit 10. The box body assembly is a structure having an internal space, and the battery unit 10 is accommodated in the internal space of the box body assembly.

The box body assembly may include a box body 20 and a cover 30. The box body 20 and the cover 30 cover each other and collectively define the aforementioned internal space of the box body assembly. In some possible designs, as shown in FIG. 2 and FIG. 3, the box body 20 and the cover 30 may each be a hollow structure with an opening at one end, where an opening side of the box body 20 covers an opening side of the cover 30, such that the box body 20 and the cover 30 collectively define the aforementioned internal space of the box body assembly. Alternatively, in some other possible designs, the box body 20 may be a hollow structure with an opening at one end, and the cover 30 may be a plate-shaped structure, where the cover 30 covers the opening side of the box body 20, such that the box body 20 and the cover 30 collectively define the aforementioned internal space of the box body assembly. The box body assembly composed of the box body 20 and the cover 30 may be of various shapes, such as a cylinder, a cuboid, or the like.

In some embodiments, at least one of the box body 20 and the cover 30 of the battery 100 can serve as a portion of the vehicle body 400 of the vehicle 1000. For example, a portion of the cover 30 may form at least a portion of a chassis of the vehicle body 400; or a portion of the cover 30 may form at least a portion of cross beams and longitudinal beams of the vehicle body 400.

The battery unit 10 includes a battery cell 1. The number of battery cells 1 in the battery unit 10 may be one or more. When there are a plurality of battery cells 1, the plurality of battery cells 1 are connected in series, parallel, or parallel-series connections via a busbar component. A parallel-series connection refers to a connection where some of the plurality of battery cells 1 are connected in series and some are connected in parallel.

In some embodiments, the plurality of battery cells 1 may be connected in series, parallel, or parallel-series connections to form an integral body, thereby constituting the battery unit 10. Then, the battery unit 10 formed by the plurality of battery cells 1 is directly accommodated in the internal space of the aforementioned box body assembly, as shown in FIG. 2 and FIG. 3.

In some other embodiments, the plurality of battery cells 1 may first be connected in series, parallel, or parallel-series connections and then arranged and fixed to form a battery module, thereby forming the battery unit 10, which is accommodated in the internal space of the aforementioned box body assembly.

In some further embodiments, the plurality of battery cells 1 may first be connected in series, parallel, or parallel-series connections and then arranged and fixed to form a plurality of battery modules. The plurality of battery modules are then connected in series, parallel, or parallel-series connections to form an integral body, thereby forming the battery unit 10, which is accommodated in the internal space of the aforementioned box body assembly.

As an example, the plurality of battery cells 1 may be fixed by a strapping band to form a battery module. As another example, the plurality of battery cells 1 may also be fixed by an end plate, a side plate, or the like, to form a battery module.

It can be understood that the battery unit 10 may be a single battery cell 1; it may also be an integral body formed by connecting a plurality of battery cells 1 in series, parallel, or parallel-series connections; it may also be a battery module formed by connecting a plurality of battery cells 1 in series, parallel, or parallel-series connections and then arranging and fixing them; or it may even be an integral body formed by first connecting a plurality of battery cells 1 in series, parallel, or parallel-series connections and then arranging and fixing them to form a plurality of battery modules, and then connecting the plurality of battery modules in series, parallel, or parallel-series connections. That is, the battery unit 10 is the integral body constituted by all battery cells 1 in the battery 100.

The battery cell 1 refers to the smallest unit for storing and outputting electrical energy. The battery cell 1 may be a secondary battery or a primary battery. The battery cell 1 may be, but is not limited to, a metal battery, a lithium-sulfur battery, a sodium-ion battery, or a magnesium-ion battery. The battery cells 1 may be cylindrical, flat, rectangular, or in other shapes.

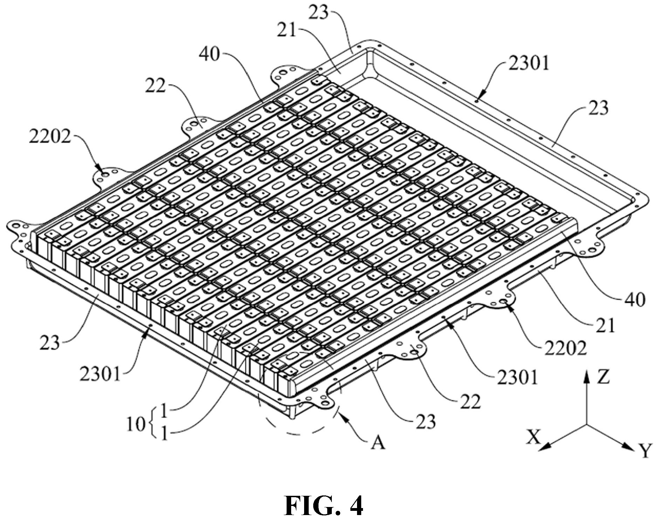

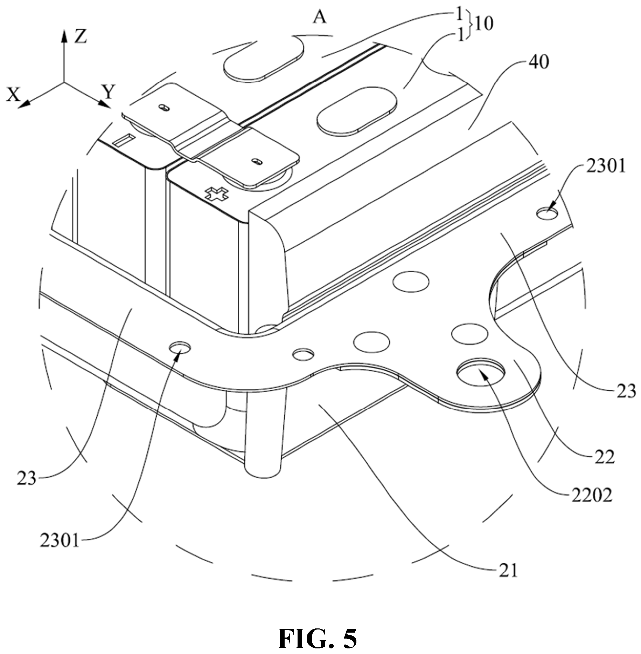

Please refer collectively to FIG. 2 to FIG. 5, and also in combination with other accompanying drawings. FIG. 4 is a cooperative structural diagram of a box body 20 and a battery unit 10 of a battery 100 according to some embodiments of the present application. FIG. 5 is an enlarged view of portion A in FIG. 4. The battery 100 according to the embodiments of the present application includes a battery unit 10 and a box body 20. The battery unit 10 includes at least one battery cell 1. The box body 20 is provided with two first walls 21 opposite to each other along a first direction Y. The two first walls 21 are each connected with a first connection member 22. The first connection member 22 is configured to be connected to an external device. The battery unit 10 is disposed between the two first walls 21 in the first direction Y. Furthermore, the battery unit 10 is position-limited by the first walls 21 in the first direction Y.

The box body 20 refers to a structure configured to accommodate the battery unit 10. Specifically, the box body 20 is configured to accommodate the battery cell 1. In some possible designs, as shown in FIG. 2 and FIG. 3, the box body 20 and the cover 30 may collectively define a space for accommodating the battery unit 10 (i.e., the aforementioned internal space of the box body 20 assembly), such that the box body 20 and the cover 30 collectively seal the battery unit 10. As an example, as shown in FIG. 2 to FIG. 4, one portion of the battery unit 10 is accommodated within the box body 20, and another portion of the battery unit 10 is accommodated within the cover 30. For example, as shown in FIG. 2 to FIG. 4, in the battery unit 10, one portion of each battery cell 1 is accommodated within the box body 20, and another portion of each battery cell 1 is accommodated within the cover 30. For another example, the battery unit 10 includes a plurality of battery cells 1. Among the plurality of battery cells 1, one portion of the battery cells 1 are accommodated within the box body 20, and another portion of the battery cells 1 are accommodated within the cover 30. As another example, the battery unit 10 is entirely accommodated within the box body 20. In some other possible designs, the box body 20 may also be configured to individually accommodate the battery unit 10, so as to individually seal the battery unit 10, without needing to cooperate with the cover 30.

The first wall 21 is a side wall of the box body 20 and is a solid wall.

The configuration in which the box body 20 is provided with two first walls 21 opposite to each other along the first direction Y means that the two first walls 21 of the box body 20 are spaced apart and arranged opposite to each other along the first direction Y. It can be understood that the side walls on two opposite sides of the box body 20 along the first direction Y are the first walls 21.

The two first walls 21 are each connected with a first connection member 22, and the number of first connection members 22 on each first wall 21 may be one or more.

The configuration in which the battery unit 10 is disposed between the two first walls 21 in the first direction Y means that one of the first walls 21, the battery unit 10, and the other first wall 21 are distributed in sequence along the first direction Y.

The configuration in which the battery unit 10 is position-limited by the first walls 21 in the first direction Y means that the battery unit 10 is located between the two first walls 21 and is position-limited in the first direction Y by the two first walls 21, that is, the battery unit 10 is position-limited between the two first walls 21 along the first direction Y. In some possible designs, the two first walls 21 respectively abut against two opposite sides, along the first direction Y, of the integral body (i.e., the battery unit 10) formed by all the battery cells 1. That is, one of the first walls 21 abuts against one side, along the first direction Y, of the integral body (i.e., the battery unit 10) formed by all the battery cells 1, and the other first wall 21 abuts against the other side, along the first direction Y, of the integral body (i.e., the battery unit 10) formed by all the battery cells 1. In this way, the first walls 21 directly provide a constraining force along the first direction Y to the battery unit 10, such that the battery unit 10 is position-limited between the two first walls 21 along the first direction Y. In some other possible designs, a filling member 40, which is to be discussed below, is disposed between at least one first wall 21 and the battery unit 10. One side of the filling member 40 along the first direction Y abuts against the battery unit 10, specifically abuts against the battery cell 1 adjacent thereto, and the other side of the filling member 40 along the first direction Y abuts against the first wall 21. Thus, the first wall 21 provides a constraining force along the first direction Y to the battery unit 10 through the filling member 40, such that the battery unit 10 is position-limited between the two first walls 21. As an example, as shown in FIG. 3 and FIG. 4, a filling member 40 is disposed between each of the two first walls 21 and the battery unit 10.

The first direction Y may be parallel to the Y-axis. Here, the X-axis, the Y-axis, and the Z-axis constitute a spatial coordinate system. The X-axis and the Y-axis are perpendicular, the X-axis and the Z-axis are perpendicular, and the Y-axis and the Z-axis are perpendicular.

The first connection member 22 refers to a component of the box body 20 that is configured to be connected to an external device. The first connection member 22 may be integrally connected to the first wall 21, or may be separately connected to the first wall 21 by means such as welding, adhesion, or bolt fastening.

The external device may be any device that needs to be fixed to the battery 100. For example, it may be one portion of the electrical apparatus discussed above. As an example, the external device may be the vehicle body 400 of the vehicle 1000. That is, when the battery 100 is assembled to the vehicle 1000, the first connection member 22 is connected to the vehicle body 400, meaning that the battery 100 is assembled to the vehicle body 400.

In the battery 100 according to the embodiments of the present application, the two first walls 21 of the box body 20 that are opposite to each other along the first direction Y are each connected to a first connection member 22. The first connection member 22 is configured to be connected to an external device. The battery unit 10 is located between the two first walls 21 along the first direction Y and is position-limited by the two first walls 21. Based on this, the first connection member 22 may be connected to the external device to achieve fixation of the battery 100 to the external device. In a case where the first connection member 22 is connected to the external device, the portion of the external device that is configured to be connected to the first connection member 22 can constrain the position of the first connection member 22. That is, it constrains the relative positions of the first connection members 22 on the two first walls 21 in the first direction Y, so as to constrain the distance between the first connection members 22 on the two first walls 21 in the first direction Y. Furthermore, it can constrain the relative positions of the two first walls 21 in the first direction Y, so as to constrain the distance between the two first walls 21 in the first direction Y. In this way, the two first walls 21 can constrain the battery unit 10 along the first direction Y, so as to effectively resist the expansion of the battery cell 1 of the battery unit 10 along the first direction Y. With such a configuration, the battery 100 according to the embodiments of the present application, on the basis of being capable of effectively resisting the expansion force of the battery cell 1, eliminates the provision of structures such as an expansion beam, which helps to reduce the cost of the battery 100 and is beneficial for improving the product competitiveness of the battery 100.

Furthermore, providing structures such as an expansion beam inside the battery 100 to resist the expansion of the battery cell 1 not only increases the cost of the battery 100 but also occupies a relatively large space inside the battery 100. Therefore, by eliminating the provision of structures such as the expansion beam, it also helps to improve the volume utilization rate of the battery 100, thereby helping to improve the energy density of the battery 100.

In some embodiments, please refer collectively to FIG. 3 and FIG. 4, and also in combination with other accompanying drawings. Each first wall 21 is connected with a plurality of first connection members 22. The plurality of first connection members 22 on each first wall 21 are distributed in a spaced-apart manner along a third direction X that is to be discussed below.

Herein, the third direction X discussed below may be parallel to the X-axis.

With such a configuration, the box body 20 may be connected to the external device via the plurality of first connection members 22. This can improve the connection reliability between the box body 20 and the external device, thereby enabling increase in the constraining force applied by the external device to the first walls 21 in the first direction Y. Consequently, the expansion force of the battery cell 1 can be effectively resisted, which helps to improve the product competitiveness of the battery 100.

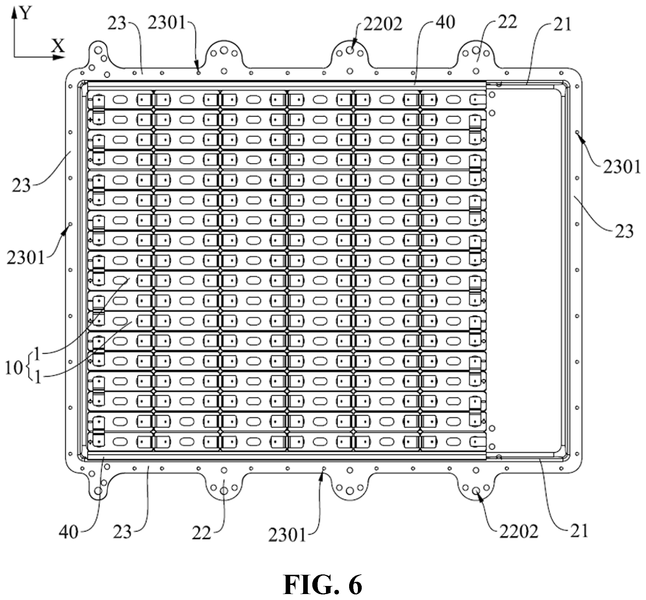

In some embodiments, please refer collectively to FIG. 3 to FIG. 6, and also in combination with other accompanying drawings. Here, FIG. 6 is a cooperative top view of a box body 20 and a battery unit 10 of a battery 100 according to some embodiments of the present application. The top view is a schematic diagram along the second direction Z. A plurality of the battery cells 1 are provided, wherein a wall surface having a largest area among all wall surfaces of at least a portion of the battery cells 1 is perpendicular to the first direction Y.

A wall surface of the battery cell 1 that is perpendicular to the first direction Y is at least one of the two wall surfaces of the battery cell 1 that are opposite to each other along the first direction Y. That is, at least one of two wall surfaces of at least a portion of the battery cells 1 that are opposite to each other along the first direction Y is the wall surface having the largest area among all wall surfaces of that portion of the battery cells 1.

It can be understood that, for one portion of the battery cells 1 in the battery unit 10, the wall surface having the largest area among all wall surfaces of the battery cell 1 is perpendicular to the first direction Y. That is, at least one of the two wall surfaces of the battery cell 1 that are opposite to each other along the first direction Y is the largest wall surface among all wall surfaces of that battery cell 1. Alternatively, for all battery cells 1 in the battery unit 10, the wall surface having the largest area among all wall surfaces of each battery cell 1 is perpendicular to the first direction Y. That is, at least one of the two wall surfaces of each battery cell 1 that are opposite to each other along the first direction Y is the largest wall surface among all wall surfaces of that battery cell 1.

At least one of the two wall surfaces of the battery cell 1 that are opposite to each other along the first direction Y being the wall surface having the largest area among all wall surfaces of the battery cell 1 may mean that at least one of the two wall surfaces of the battery cell 1 that are opposite to each other along the first direction Y is larger than the other wall surfaces of the battery cell 1. It may also mean that at least one of the two wall surfaces of the battery cell 1 that are opposite to each other along the first direction Y is larger than one portion of the other wall surfaces of the battery cell 1 and is equal to the other portion of the other wall surfaces of the battery cell 1.

By adopting the aforementioned technical solution, at least one of the two wall surfaces of at least a portion of the battery cells 1 that are opposite to each other along the first direction Y is the largest wall surface of the battery cell 1, and the largest wall surface of the battery cell 1 is the wall surface where the expansion of the battery cell 1 is more likely to occur. With such a configuration, under the constraining effect of the external device on the first connection members 22 on the two first walls 21, the two first walls 21 can constrain the battery unit 10 along the first direction Y, so as to effectively resist the expansion of the battery cell 1 of the battery unit 10 along the first direction Y, meaning that the expansion force of the largest wall surface of at least a portion of the battery cells 1 can be effectively resisted, thereby enabling improvement in the product competitiveness of the battery 100.

In some embodiments, please refer collectively to FIG. 3 to FIG. 6, and also in combination with other accompanying drawings. The battery unit 10 includes at least one group of a plurality of battery cells 1 arranged along the first direction Y, where all of the battery cells 1 in each group sequentially abut along the first direction Y, and a wall surface having a largest area among all wall surfaces of the battery cells 1 is perpendicular to the first direction Y.

The configuration in which the battery unit 10 includes at least one group of a plurality of battery cells 1 arranged along the first direction Y means that the battery unit 10 includes at least one group of battery cells 1, where each group of battery cells 1 includes a plurality of battery cells 1 arranged along the first direction Y.

It can be understood that at least one of two wall surfaces of the battery cell 1 that are opposite to each other along the first direction Y is the wall surface having the largest area among all wall surfaces of the battery cell 1.

At least one of the two wall surfaces of the battery cell 1 that are opposite to each other along the first direction Y being the wall surface having the largest area among all wall surfaces of the battery cell 1 may mean that at least one of the two wall surfaces of the battery cell 1 that are opposite to each other along the first direction Y is larger than the other wall surfaces of the battery cell 1. It may also mean that at least one of the two wall surfaces of the battery cell 1 that are opposite to each other along the first direction Y is larger than one portion of the other wall surfaces of the battery cell 1 and is equal to the other portion of the other wall surfaces of the battery cell 1. That is, at least one of the two wall surfaces of each battery cell 1 that are opposite to each other along the first direction Y is the largest wall surface of that battery cell 1.

The arrangement in which all of the battery cells 1 in each group sequentially abut along the first direction Y causes the largest wall surfaces of all the battery cells 1 in each group to sequentially abut.

All of the battery cells 1 in each group are disposed to sequentially abut along the first direction Y, and at least one of the two wall surfaces of each battery cell 1 that are opposite to each other along the first direction Y is configured to be the largest wall surface of the battery cell 1. With such a configuration, under the constraining effect of the external device on the first connection members 22 on the two first walls 21, the two first walls 21 can constrain the battery unit 10 along the first direction Y, so as to effectively resist the expansion of the battery cell 1 of the battery unit 10 along the first direction Y, meaning that the expansion of the largest wall surface of all the battery cells 1 of each group can be effectively resisted, thereby enabling improvement in the product competitiveness of the battery 100.

In some embodiments, as shown in FIG. 3, FIG. 4, and FIG. 6, and also in combination with other accompanying drawings, the plurality of battery cells 1 constitute a plurality of groups of battery cells 1, and the plurality of groups of battery cells 1 are distributed in sequence along the third direction X discussed below.

In some embodiments, please refer collectively to FIG. 3 to FIG. 5, and also in combination with other accompanying drawings. A projection of the first connection member 22 onto the first wall 21 along the first direction Y at least partially overlaps a projection of at least a portion of the battery cells 1 onto the first wall 21 along the first direction Y.

At least a portion of the battery cells 1 refers to at least one battery cell 1, which may be one or more battery cells 1.

The configuration in which the projection of the first connection member 22 onto the first wall 21 along the first direction Y at least partially overlaps the projection of at least one battery cell 1 onto the first wall 21 along the first direction Y means that an orthographic projection of the first connection member 22 onto the first wall 21 and an orthographic projection of at least one battery cell 1 onto the first wall 21 have overlapping portions. It can be understood that at least a portion of the orthographic projection of the first connection member 22 onto the first wall 21 and at least a portion of the orthographic projection of at least one battery cell 1 onto the first wall 21 are located at the same position, thereby achieving overlap.

With such a configuration, a force applied by the external device to the first connection member 22 can effectively resist the expansion force of the wall surface of at least a portion of the battery cells 1 along the first direction Y, thereby enabling effective improvement in the product competitiveness of the battery 100.

In some embodiments, please refer collectively to FIG. 3 to FIG. 5, and also in combination with other accompanying drawings. A projection of the battery cells 1 of each group onto the first wall 21 along the first direction Y at least partially overlaps a projection of at least one first connection member 22 onto the first wall 21 along the first direction Y.

It can be understood that a projection of each first connection member 22 onto the first wall 21 along the first direction Y may at least partially overlap a projection of at least one group of battery cells 1 onto the first wall 21 along the first direction Y.

With such a configuration, a force applied by the external device to the first connection member 22 can effectively resist the expansion force of the wall surfaces of the battery cells 1 of each group along the first direction Y, thereby enabling effective improvement in the product competitiveness of the battery 100.

In some embodiments, please refer collectively to FIG. 2 and FIG. 3, and also in combination with other accompanying drawings. The battery 100 further includes a cover 30. The cover 30 is connected to an end of the box body 20 that is located along a second direction Z, the second direction Z intersecting with the first direction Y, where the battery unit 10 is disposed within a space enclosed by the box body 20 and the cover 30.

It can be understood that the box body 20 is a hollow structure with an opening at one end.

The cover 30 refers to a structure configured to cover the box body 20 to accommodate the battery unit 10 together with the box body 20, where the cover 30 may be a hollow structure with an opening at one end, or may be a plate-shaped structure.

The second direction Z may be parallel to the Z-axis.

The first direction Y intersecting with the second direction Z means that the first direction Y and the second direction Z can form an angle greater than 0° and less than 180°, that is, the first direction Y and the second direction Z are not parallel, where the first direction Y and the second direction Z may be perpendicular to each other, or may be non-perpendicular. The first direction Y and the second direction Z may be intersecting directions lying on the same plane, or may be directions residing on mutually non-coplanar planes, and a projection of the second direction Z on the plane in which the first direction Y lies may intersect with the first direction Y.

By connecting the cover 30 to the box body 20, the box body 20 can, through the connection relationship between the cover 30 and the box body 20, constrain relative positions of the two first walls 21 in the first direction Y, such that the two first walls 21 can constrain the battery unit 10 along the first direction Y to effectively resist the expansion of the battery cell 1 of the battery unit 10 along the first direction Y, which is beneficial for improving the product competitiveness of the battery 100.

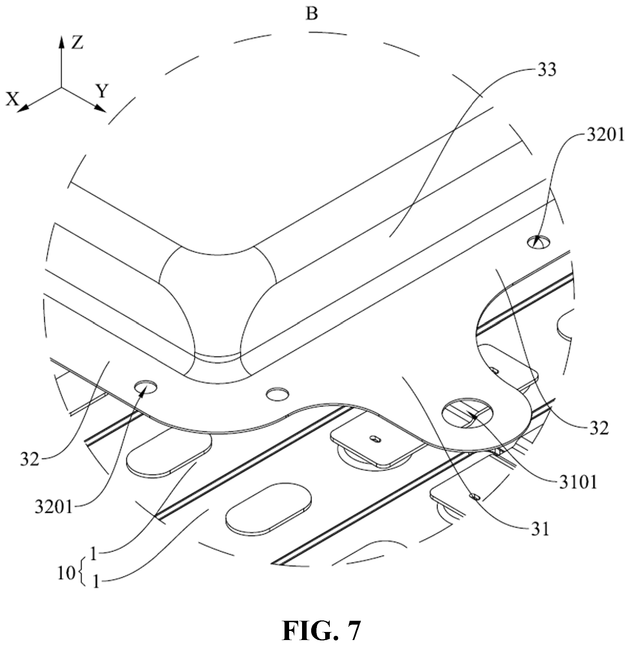

In some embodiments, please refer collectively to FIG. 2 to FIG. 7, and also in combination with other accompanying drawings. Herein, FIG. 7 is an enlarged view of portion B in FIG. 3. Two opposite sides of the cover 30 along the first direction Y are each provided with a second connection member 31, the second connection member 31 being configured to be connected to the first connection member 22 and the external device.

The second connection member 31 refers to a component of the cover 30 that is configured to be connected to the external device.

It can be understood that the second connection member 31 on one side of the cover 30 along the first direction Y may be connected to the first connection member 22 on one of the first walls 21 and also connected to the external device. The second connection member 31 on the other side of the cover 30 along the first direction Y may be connected to the first connection member 22 on the other first wall 21 and also connected to the external device.

The manner in which the second connection member 31 is connected to the first connection member 22 and the external device can be varied. As an example, as shown in FIG. 5 and FIG. 7, the first connection member 22 is provided with a first connection hole 2202, and the second connection member 31 is provided with a second connection hole 3101. By sequentially passing a bolt through the first connection hole 2202 and the second connection hole 3101, and then connecting it to the external device, connection among the first connection member 22, the second connection member 31, and the external device can be achieved, that is, connection among the box body 20, the cover 30, and the external device can be achieved.

With such a configuration, the second connection member 31 can be connected to the first connection member 22, and then connected together to the external device, which can improve connection strength between the box body 20, the cover 30, and the external device, thereby enabling improvement in the constraining force on the first walls 21, which further enables improvement in resistance to the expansion force of the battery cell 1, thereby enabling effective mitigation of the problem of the expansion of the battery cell 1, so as to benefit the improvement of the product competitiveness of the battery 100.

The number of the second connection members 31 on one side of the cover 30 along the first direction Y may be one or more. The number of the second connection members 31 may be the same as or different from the number of the first connection members 22, as long as the second connection members 31 can be connected to the first connection members 22 to jointly connect to the external device.

In some embodiments, please refer collectively to FIG. 2 to FIG. 5, and also in combination with other accompanying drawings. The battery unit 10 extends beyond the box body 20 along the second direction Z toward the cover 30.

As shown in FIG. 3, the box body 20 and the cover 30 are each a hollow structure with an opening at one end along the second direction Z, where an opening side of the cover 30 along the second direction Z covers an opening side of the box body 20 along the second direction Z, such that the box body 20 and the cover 30 collectively define a space for accommodating the battery unit 10.

It can be understood that one portion of the battery unit 10 along the second direction Z is accommodated within the box body 20, and another portion of the battery unit 10 along the second direction Z extends beyond the box body 20 along the second direction Z toward the cover 30, so as to be accommodated in the cover 30.

Specifically, one portion of the battery unit 10 along the second direction Z is accommodated within the box body 20 and is located between the two first walls 21 of the box body 20, so as to be position-limited in the first direction Y by the first walls 21. Another portion of the battery unit 10 along the second direction Z extends beyond the first walls 21 of the box body 20 and is accommodated within the cover 30. Two side walls of the cover 30 that are opposite to each other along the first direction Y are fourth walls 33, and the other portion of the battery cell 1 along the second direction Z extends beyond the first walls 21 of the box body 20 and is located between the two fourth walls 33 of the cover 30, so as to be position-limited in the first direction Y by the two fourth walls 33.

The fourth walls 33 are side walls of the cover 30 and are solid walls.

With such a configuration, the two portions of the battery cell 1 along the second direction Z are respectively accommodated within the box body 20 and the cover 30, thereby allowing a connection portion between the box body 20 and the cover 30 to be located between the two opposite ends of the battery unit 10 along the second direction Z. Both the first walls 21 of the box body 20 and the side walls of the cover 30 along the first direction Y can effectively constrain the battery unit 10. As such, the constraining force exerted by the box body 20 assembly, which is constituted by the box body 20 and the cover 30, on the battery cell 1 of the battery unit 10 can be increased, thereby enabling effective improvement in resistance to the expansion force of the battery cell 1.

It needs to be supplemented here that the two fourth walls 33 of the cover 30 that are opposite to each other along the first direction Y are each connected with a second connection member 31 described above. The fourth walls 33 and the second connection member 31 are integrally connected or separately connected.

In some embodiments, please refer collectively to FIG. 3 to FIG. 7, and also in combination with other accompanying drawings. An edge of an end of the box body 20 facing the cover 30 along the second direction Z is provided with a third connection member 23, and an edge of an end of the cover 30 facing the box body 20 along the second direction Z is provided with a fourth connection member 32, the third connection member 23 being connected to the fourth connection member 32.

The third connection member 23 refers to a component on the box body 20 that is configured to be connected to the cover 30, and the fourth connection member 32 refers to a component on the cover 30 that is configured to be connected to the box body 20.

As an example, as shown in FIG. 5 and FIG. 7, the third connection member 23 is provided with a third connection hole 2301, and the fourth connection member 32 is provided with a fourth connection hole 3201. By sequentially passing a bolt through the third connection hole 2301 and the fourth connection hole 3201, the third connection member 23 and the fourth connection member 32 are connected, that is, connection between the box body 20 and the cover 30 is achieved.

Based on the aforementioned structure, the third connection member 23 and the fourth connection member 32 are located between two opposite ends of the battery unit 10 along the second direction Z, that is, a connection portion between the box body 20 and the cover 30 is located between the two opposite ends of the battery unit 10 along the second direction Z. With such a configuration, the constraining force exerted by the box body 20 assembly, which is constituted by the box body 20 and the cover 30, on the battery unit 10 can be increased, thereby enabling effective improvement in resistance to the expansion force of the battery cell 1 of the battery unit 10.

It needs to be supplemented here that the third connection member 23 may be connected to the first wall 21, or may be connected to other side walls of the box body 20; moreover, as shown in FIG. 2 to FIG. 6, the first wall 21 and the other side walls of the box body 20 may each be connected with a third connection member 23, that is, the third connection member 23 is provided on a peripheral edge of the end of the box body 20 facing the cover 30 along the second direction Z. Correspondingly, the fourth connection member 32 may be connected to the fourth wall 33, or may be connected to other side walls of the cover 30; moreover, as shown in FIG. 2 and FIG. 3, the fourth wall 33 and the other side walls of the cover 30 may each be connected with a fourth connection member 32, that is, the fourth connection member 32 is provided on a peripheral edge of the end of the cover 30 facing the box body 20 along the second direction Z.

In some embodiments, please refer collectively to FIG. 3 to FIG. 6, and also in combination with other accompanying drawings. The first connection member 22 is disposed on the third connection member 23.

The first connection member 22 may be integrally formed on the third connection member 23, or may be separately formed on the third connection member 23.

With such a configuration, formation of the first connection member 22 on the box body 20 is made very simple.

In some embodiments, please refer collectively to FIG. 3 and FIG. 7, and also in combination with other accompanying drawings. The second connection member 31 is disposed on the fourth connection member 32.

The second connection member 31 may be integrally provided on the fourth connection member 32, or may be separately provided on the fourth connection member 32.

With such a configuration, formation of the second connection member 31 on the cover 30 is made very simple.

In some embodiments, please refer collectively to FIG. 3 to FIG. 7, and also in combination with other accompanying drawings. The first connection member 22 is disposed on the third connection member 23, and the second connection member 31 is disposed on the fourth connection member 32.

In some embodiments, the box body 20 is a sheet metal member; or the cover 30 is a sheet metal member; or the box body 20 and the cover 30 are both sheet metal members.

With such a configuration, the box body 20 and/or the cover 30 have relatively high structural strength, and thus can provide a relatively large constraining force to the battery cell 1, thereby enabling effective resistance to the expansion of the battery cell 1, so as to improve the product competitiveness of the battery 100.

In some embodiments, a first fixing structure is disposed between the cover 30 and the battery unit 10, the first fixing structure fixing the battery unit 10 to the cover 30.

The first fixing structure refers to a structure configured to fix the battery unit 10 to the cover 30. Specifically, the first fixing structure is configured to fix the battery cell 1 to the cover 30.

With such a configuration, the battery unit 10 is fixed to the cover 30 via the first fixing structure, enabling the cover 30 to provide a certain constraining effect on the battery unit 10, which helps to resist the expansion force of the battery cell 1.

In some embodiments, a second fixing structure is disposed between the box body 20 and the battery unit 10, the second fixing structure fixing the battery unit 10 to the box body 20.

The second fixing structure refers to a structure configured to fix the battery cell 1 to the box body 20. Specifically, the second fixing structure is configured to fix the battery cell 1 to the box body 20.

With such a configuration, the battery unit 10 is fixed to the box body 20 via the second fixing structure, enabling the box body 20 to provide a certain constraining effect on the battery unit 10, which helps to resist the expansion force of the battery cell 1.

In some embodiments, a first fixing structure is disposed between the cover 30 and the battery unit 10, the first fixing structure fixing the battery unit 10 to the cover 30. Furthermore, a second fixing structure is disposed between the box body 20 and the battery unit 10, the second fixing structure fixing the battery unit 10 to the box body 20.

In some embodiments, the first fixing structure includes an adhesive layer.

In some possible designs, the adhesive layer may be disposed at an end of the battery unit 10 that faces the cover 30 along the second direction Z, so as to be adhered to one side of the cover 30 that is located along the second direction Z. In some other possible designs, the adhesive layer may also be disposed at other portions of the battery unit 10.

With such a configuration, the battery unit 10 is adhered to the cover 30 via the adhesive layer, which can reduce the cost of fixing the battery unit 10 to the cover 30. Furthermore, the process of fixing the battery unit 10 to the cover 30 is made very simple and easy to implement.

In some embodiments, the second fixing structure includes an adhesive layer.

In some possible designs, the adhesive layer may be disposed at an end of the battery unit 10 that faces the box body 20 along the second direction Z, so as to be adhered to one side of the box body 20 that is located along the second direction Z. In some other possible designs, the adhesive layer may also be disposed at other portions of the battery unit 10.

With such a configuration, the battery unit 10 is adhered to the box body 20 via the adhesive layer, which can reduce the cost of fixing the battery unit 10 to the box body 20. Furthermore, the process of fixing the battery unit 10 to the box body 20 is made very simple and easy to implement.

In some embodiments, the first fixing structure and the second fixing structure each include an adhesive layer.

It needs to be supplemented here that the adhesive layer refers to a structure having adhesive capability.

In some embodiments, the adhesive layer may be a double-sided tape, a structural adhesive, a foamed adhesive, or the like.

When the adhesive layer is a foamed adhesive, the adhesive layer can be better filled between the battery unit 10 and the cover 30, so as to improve the constraining capability of the cover 30 on the battery unit 10. It can also enable the adhesive layer to be better filled between the battery unit 10 and the box body 20, so as to improve the constraining capability of the box body 20 on the battery unit 10.

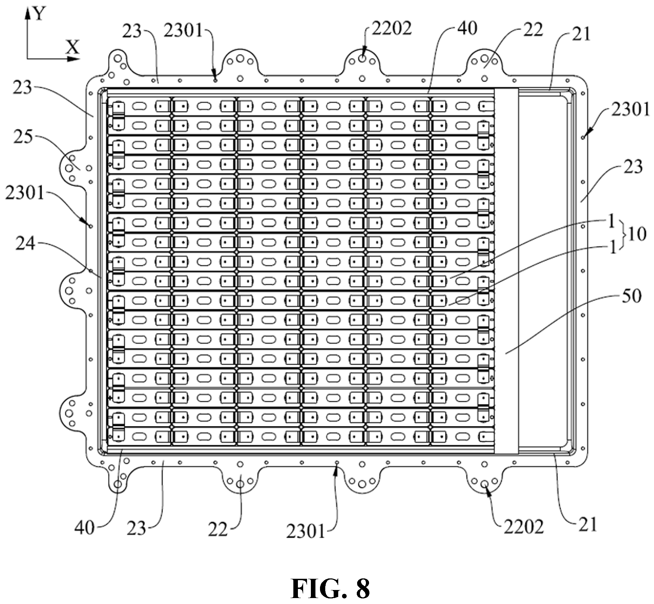

In some embodiments, please refer to FIG. 8, and also in combination with other accompanying drawings. Herein, FIG. 8 is a cooperative top view of a box body 20 and a battery unit 10 of a battery 100 according to some other embodiments of the present application. The top view is a schematic diagram along the second direction Z. One side of the box body 20 along a third direction X is provided with a second wall 24, the second wall 24 being configured to position-limit the battery unit 10 along the third direction X. The second wall 24 is connected to a fifth connection member 25, the fifth connection member 25 being configured to be connected to the external device. Herein, the third direction X intersects with the first direction Y, and the third direction X intersects with the second direction Z.

The third direction X may be parallel to the X-axis.

For the meanings of intersection of the third direction X with the first direction Y and intersection of the third direction X with the second direction Z, reference may both be made to the explanation of the intersection between the first direction Y and the second direction Z provided above, which will not be repeated here.

The second wall 24 is a side wall of the box body 20 and is a solid wall.

The second wall 24 being configured to position-limit the battery unit 10 along the third direction X means that the battery unit 10 is located on one side of the second wall 24 that is located along the third direction X. The second wall 24 may abut against the battery unit 10 along the third direction X, enabling the second wall 24 to provide a constraining force along the third direction X to the battery unit 10, thereby position-limiting the battery unit 10 along the third direction X. A filling member 40 to be discussed below may also be disposed between the battery unit 10 and the second wall 24, enabling the second wall 24 to provide a constraining force to the battery unit 10 through the filling member 40, thereby position-limiting the battery unit 10 along the third direction X.

The fifth connection member 25 refers to a component of the box body 20 that is configured to be connected to the external device. The fifth connection member 25 may be integrally connected to the second wall 24, or may be separately connected to the second wall 24.

The second wall 24 may be connected with one or more fifth connection members 25.

By providing the side of the box body 20 along the third direction X with the second wall 24 configured to position-limit the battery unit 10, and by connecting the second wall 24 with the fifth connection member 25 configured to be connected to the external device, the external device can constrain the position of the fifth connection member 25 in the third direction X, thereby constraining the position of the second wall 24 connected to the fifth connection member 25, and thus can constrain the battery unit 10 along the third direction X, so as to effectively resist the expansion of the battery cell 1 in the third direction X. As such, the expansion of the battery cell 1 can be resisted in multiple directions, which is beneficial for improving the product competitiveness of the battery 100 and results in a low cost.

It needs to be supplemented here that one end of the second wall 24 along the first direction Y is connected to one of the first walls 21, and the other end of the second wall 24 along the first direction Y is connected to the other first wall 21.

Furthermore, when the second wall 24 is provided with the aforementioned third connection member 23, the fifth connection member 25 may be disposed on the third connection member 23.

In some embodiments, one side of the cover 30 along the third direction X may also be provided with a corresponding connection member, so as to be connected to the fifth connection member 25 to jointly connect to the external device.

In some embodiments, please refer to FIG. 8, and also in combination with other accompanying drawings. A constraint member 50 is disposed inside the box body 20. The constraint member 50 is arranged opposite to the second wall 24 along the third direction X. Along the third direction X, the battery unit 10 is located between the second wall 24 and the constraint member 50, and is position-limited by the second wall 24 and the constraint member 50.

The constraint member 50 refers to a structure configured to constrain the battery unit 10 to resist the expansion of the battery cell 1. The constraint member 50 and the second wall 24 are spaced apart and arranged opposite to each other along the third direction X.

In some possible designs, the constraint member 50 may abut against the battery unit 10 along the third direction X, enabling the constraint member 50 to provide a constraining force to the battery unit 10, thereby position-limiting the battery unit 10 along the third direction X. A filling member 40 discussed below may also be disposed between the battery unit 10 and the constraint member 50, enabling the constraint member 50 to provide a constraining force to the battery unit 10 through the filling member 40, thereby position-limiting the battery unit 10 along the third direction X.

With such a configuration, the external device and the constraint member 50 can jointly resist the expansion of the battery unit 10 in the third direction X.

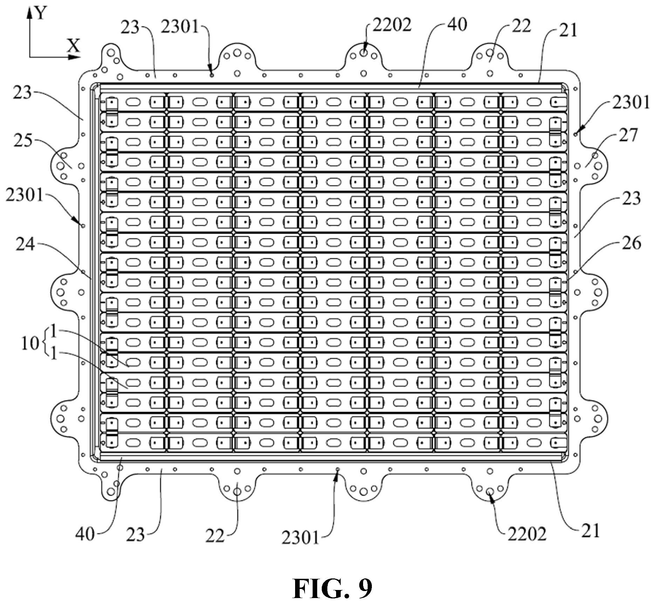

In some embodiments, please refer to FIG. 9, and also in combination with other accompanying drawings. Herein, FIG. 9 is a cooperative top view of a box body 20 and a battery unit 10 of a battery 100 according to some further embodiments of the present application. The top view is a schematic diagram along the second direction Z. The box body 20 is provided with a third wall 26. The third wall 26 is arranged opposite to the second wall 24 along the third direction X. The third wall 26 is connected with a sixth connection member 27, the sixth connection member 27 being configured to be connected to the external device. Along the third direction X, the battery cell 1 is located between the second wall 24 and the third wall 26, and is position-limited by the second wall 24 and the third wall 26.

The third wall 26 is a side wall of the box body 20 and is a solid wall. The second wall 24 and the third wall 26 are spaced apart and arranged opposite to each other along the third direction X. It can be understood that the side walls on the two opposite sides of the box body 20 along the third direction X are the second wall 24 and the third wall 26, respectively.

The sixth connection member 27 refers to a component of the box body 20 that is configured to be connected to the external device. The sixth connection member 27 may be integrally connected to the third wall 26, or may be separately connected to the third wall 26.

The third wall 26 may be connected with one or more sixth connection members 27.

The battery unit 10 being located between the second wall 24 and the third wall 26 along the third direction X means that the second wall 24, the battery unit 10, and the third wall 26 are distributed in sequence along the third direction X.

The battery unit 10 being position-limited by the second wall 24 and the third wall 26 in the third direction X means that the battery unit 10 is located between the second wall 24 and the third wall 26 and is position-limited in the third direction X by the second wall 24 and the third wall 26, that is, the battery unit 10 is position-limited between the second wall 24 and the third wall 26 along the third direction X. The second wall 24 may abut against the battery unit 10 along the third direction X to provide a constraining force to the battery unit 10; a filling member 40 to be discussed below may also be disposed between the second wall 24 and the battery unit 10, so as to enable the second wall 24 to provide a constraining force to the battery unit 10 through the filling member 40. The third wall 26 may abut against the battery unit 10 along the third direction X to provide a constraining force to the battery unit 10; a filling member 40 to be discussed below may also be disposed between the third wall 26 and the battery unit 10, so as to enable the third wall 26 to provide a constraining force to the battery unit 10 through the filling member 40. Based on this, the battery unit 10 is position-limited between the second wall 24 and the third wall 26 along the third direction X.

With such a configuration, the external device can constrain the relative positions of the fifth connection member 25 and the sixth connection member 27 in the third direction X, so as to constrain the relative positions of the second wall 24 and the third wall 26 in the third direction X, thereby enabling effective resistance to the expansion of the battery cell 1 in the third direction X.

Based on this, the resistance to the expansion of the battery cell 1 can be achieved in multiple directions, with a low cost and high product competitiveness.

It needs to be supplemented here that one end of the third wall 26 along the first direction Y is connected to one of the first walls 21, and the other end of the third wall 26 along the first direction Y is connected to the other first wall 21.

Furthermore, when the third wall 26 is provided with the aforementioned third connection member 23, the sixth connection member 27 may be disposed on the third connection member 23.

In some embodiments, one side of the cover 30 that is opposite to the fifth connection member 25 along the third direction X may also be provided with a corresponding connection member, so as to be connected to the sixth connection member 27 to jointly connect to the external device.

In some embodiments, please refer collectively to FIG. 3 to FIG. 9, and also in combination with other accompanying drawings. Along the first direction Y, a filling member 40 is disposed between at least one first wall 21 and the battery unit 10, the filling member 40 abutting against the first wall 21 and the battery unit 10.

Specifically, the filling member 40 is disposed between at least one first wall 21 and the battery cell 1 adjacent thereto, the filling member 40 abutting against the first wall 21 and the battery cell 1 adjacent thereto.

In some possible designs, a filling member 40 is disposed between one of the first walls 21 and the battery unit 10. In some other possible designs, a filling member 40 is disposed between one of the first walls 21 and the battery unit 10, and a filling member 40 is also disposed between the other first wall 21 and the battery unit 10.

Furthermore, the filling member 40 abuts against the first wall 21 and the battery unit 10, such that the first wall 21 can better transmit a constraining force to the battery unit 10 to constrain the expansion of the battery cell 1 in the first direction Y.

In some embodiments, the filling member 40 includes one or more of a foamed material member, an elastic structure, and a plastic member.

With such a configuration, the filling member 40 can be better filled between the first wall 21 and the battery unit 10, facilitating the transmission of the constraining force from the first walls 21 to the battery unit 10, thereby effectively improving the effective resistance effect to the expansion of the battery cell 1.

In some embodiments, the battery 100 further includes a thermal management component, the thermal management component being disposed on the box body 20, and the thermal management component being configured to exchange heat with the battery unit 10.

It can be understood that, during operation, an external heating or cooling fluid can circulate within the thermal management component and exchange heat with the battery unit 10 to achieve heating or cooling of the battery unit 10.

In some possible designs, the thermal management component is disposed on one side of the box body 20 that faces the battery unit 10 along the second direction Z. In some other possible designs, the thermal management component is disposed on one side of the box body 20 away from the battery unit 10 along the second direction Z. In other possible designs, the thermal management component may be located at other portions of the box body 20.

It needs to be supplemented here that, when the thermal management component is disposed on one side of the box body 20 that faces the battery unit 10 along the second direction Z, the second fixing structure can fix the battery unit 10 to the thermal management component, thereby achieving indirect fixation of the battery unit 10 to the box body 20.

With such a configuration, heating up or cooling down of the battery 100 can be achieved, which is beneficial for improving the product competitiveness of the battery 100.

Please refer to FIG. 1. The electrical apparatus according to an embodiment of the present application includes a battery 100. Here, the battery 100 in this embodiment is the same as the battery 100 in the previous embodiment. For details, please refer to the relevant description of the battery 100 in the previous embodiment, which will not be repeated here.

The electrical apparatus according to the embodiment of the present application, by adopting the battery 100 discussed above, can resist the expansion of the battery cell 1 along the first direction Y by the electrical apparatus itself. On the basis of being capable of effectively resisting the expansion force of the battery cell 1, the provision of structures such as an expansion beam is eliminated, which helps to reduce the cost of the battery 100 and is beneficial for improving the product competitiveness.

As one of the embodiments of the present application, as shown in FIG. 2 to FIG. 7, the battery 100 includes a box body 20, a cover 30, and a battery unit 10. The battery unit 10 includes a plurality of groups of battery cells 1, where each group of battery cells 1 includes a plurality of battery cells 1, the plurality of battery cells 1 in each group sequentially abutting along the first direction Y, and a wall surface having a largest area among all wall surfaces of the battery cells 1 being perpendicular to the first direction Y.

The box body 20 and the cover 30 are each configured as a hollow structure with an opening at one end along the second direction Z, where an opening side of the box body 20 along the second direction Z covers an opening side of the cover 30 along the second direction Z, and the battery unit 10 is disposed in a space enclosed by the box body 20 and the cover 30.

Two side walls of the box body 20 that are opposite to each other along the first direction Y are respectively the first walls 21, the two first walls 21 being each connected to a first connection member 22. Two side walls of the cover 30 that are opposite to each other along the first direction Y are fourth walls 33, the two fourth walls 33 being each connected to a second connection member 31. The first connection member 22 and the second connection member 31 are connected, and are configured to be connected to the external device. Here, the two first walls 21 and the two fourth walls 33 are in one-to-one correspondence.

One portion of each battery cell 1 along the second direction Z is accommodated within the box body 20, so as to be located between the two first walls 21. The other portion of each battery cell 1 along the second direction Z extends beyond the second wall 24 and is accommodated within the cover 30, so as to be located between the two fourth walls 33.

A filling member 40 is disposed between each first wall 21 and the battery unit 10, where two opposite sides of the filling member 40 along the first direction Y abut against the first wall 21 and the battery unit 10, respectively. Furthermore, the two opposite sides of each filling member 40 along the first direction Y abut against the fourth wall 33 and the battery unit 10, respectively.

The above describes merely optional embodiments of the present application and is not intended to limit the present application. For those skilled in the art, the present application may have various modifications and changes. Any modifications, equivalent substitutions, improvements, etc. made within the spirit and principles of the present application shall fall into the scope of the claims of the present application.

## Claims

1. A battery (100), comprising:
a battery unit (10) comprising at least one battery cell (1); and
a box body (20) provided with two first walls (21) opposite to each other along a first direction (Y), the two first walls (21) being each connected with a first connection member (22) configured to be connected to an external device, wherein in the first direction (Y), the battery unit (10) is disposed between the two first walls (21) and is position-limited by the first walls (21).

2. The battery (100) according to claim 1, wherein a plurality of the battery cells (1) are provided, wherein a wall surface having a largest area among all wall surfaces of at least a portion of the battery cells (1) is perpendicular to the first direction (Y).

3. The battery (100) according to claim 1 or 2, wherein a projection of the first connection member (22) onto the first wall (21) along the first direction (Y) at least partially overlaps a projection of at least a portion of the battery cells (1) onto the first wall (21) along the first direction (Y).

4. The battery (100) according to any one of claims 1-3, wherein the battery unit (10) comprises at least one group of a plurality of battery cells (1) arranged along the first direction (Y), all of the battery cells (1) in each group sequentially abutting along the first direction (Y), and a wall surface having a largest area among all wall surfaces of the battery cells (1) being perpendicular to the first direction (Y).

5. The battery (100) according to claim 4, wherein a projection of the battery cells (1) of each group onto the first wall (21) along the first direction (Y) at least partially overlaps a projection of at least one said first connection member (22) onto the first wall (21) along the first direction (Y).

6. The battery (100) according to any one of claims 1-5, wherein the battery (100) further comprises a cover (30) connected to an end of the box body (20) that is located along a second direction (Z), the second direction (Z) intersecting with the first direction (Y), wherein the battery unit (10) is disposed within a space enclosed by the box body (20) and the cover (30).

7. The battery (100) according to claim 6, wherein two opposite sides of the cover (30) along the first direction (Y) are each provided with a second connection member (31), the second connection member (31) being configured to be connected to the first connection member (21) and the external device.

8. The battery (100) according to claim 6 or 7, wherein the battery unit (10) extends beyond the box body (20) along the second direction (Z) toward the cover (30).

9. The battery (100) according to claim 7, wherein an edge of an end of the box body (20) facing the cover (30) along the second direction (Z) is provided with a third connection member (23), and an edge of an end of the cover (30) facing the box body (20) along the second direction (Z) is provided with a fourth connection member (32), the third connection member (23) being connected to the fourth connection member (32).

10. The battery (100) according to claim 9, wherein the first connection member (22) is disposed on the third connection member (23); and/or the second connection member (31) is disposed on the fourth connection member (32).

11. The battery (100) according to any one of claims 6-10, wherein a first fixing structure is disposed between the cover (30) and the battery unit (10), the first fixing structure fixing the battery unit (10) to the cover (30);
and/or a second fixing structure is disposed between the box body (20) and the battery unit (10), the second fixing structure fixing the battery unit (10) to the box body (20).

12. The battery (100) according to claim 11, wherein the first fixing structure and/or the second fixing structure comprises an adhesive layer.

13. The battery (100) according to any one of claims 6-12, wherein one side of the box body (20) along a third direction (X) is provided with a second wall (24), the second wall (24) being configured to position-limit the battery unit (10) along the third direction (X), and the second wall (24) being connected with a fifth connection member (25) configured to be connected to the external device, wherein the third direction (X) intersects with both the first direction (Y) and the second direction (Z).

14. The battery (100) according to claim 13, wherein a constraint member (50) opposite to the second wall (24) along the third direction (X) is disposed inside the box body (20), wherein along the third direction (X), the battery unit (10) is located between the second wall (24) and the constraint member (50) and is position-limited by the second wall (24) and the constraint member (50);
or the box body (20) is provided with a third wall (26) opposite to the second wall (24) along the third direction (X), the third wall (26) being connected with a sixth connection member (27) configured to be connected to the external device, wherein along the third direction (X), the battery unit (10) is located between the second wall (24) and the third wall (26) and is position-limited by the second wall (24) and the third wall (26).

15. The battery (100) according to any one of claims 1-14, wherein along the first direction (Y), a filling member (40) is disposed between at least one of the first walls (21) and the battery unit (10), the filling member (40) abutting against the first wall (21) and the battery unit (10).

16. The battery (100) according to claim 15, wherein the filling member (40) comprises one or more of a foamed material member, an elastic structure, and a plastic member.

17. The battery (100) according to any one of claims 1-16, wherein the battery (100) further comprises a thermal management component disposed on the box body (20), the thermal management component being configured to exchange heat with the battery unit (10).

18. An electrical apparatus, comprising the battery (100) according to any one of claims 1-17.
